(19) Europäisches Patentamt
European Patent Office
Office européen des brevets

(11) Veröffentlichungsnummer: **0 160 845**
**B1**

# (12) EUROPÄISCHE PATENTSCHRIFT

(45) Veröffentlichungstag der Patentschrift: **21.02.90**

(51) Int. Cl.[5]: **H 01 M 10/34**, H 01 M 4/26

(21) Anmeldenummer: **85104121.0**

(22) Anmeldetag: **04.04.85**

## (54) Verfahren zur Herstellung eines gasdicht verschlossenen Akkumulators.

**Teilanmeldung 88110153 eingereicht am 25.06.88.**

(30) Priorität: **07.05.84 DE 3416817**

(43) Veröffentlichungstag der Anmeldung: **13.11.85 Patentblatt 85/46**

(45) Bekanntmachung des Hinweises auf die Patenterteilung: **21.02.90 Patentblatt 90/8**

(84) Benannte Vertragsstaaten: **CH DE FR GB IT LI**

(56) Entgegenhaltungen:
**FR-A-1 130 343**
**FR-A-2 546 667**
**GB-A-1 088 271**

**PATENTS ABSTRACTS OF JAPAN, Band 6, Nr. 251 (E-147)[1129], 10. Dezember 1982; & JP-A-57 151 177**
**CHEMICAL ABSTRACTS, Band 85, Nr. 6, 9. August 1976, Seite 151, Zusammenfassung 35436d, Columbus, Ohio, US; V.V. ROMANOV et al.: "Dry-charged nickel-cadmium storage battery" & Zh. Prikl. Khim. (Leningrad) 1976, 49(1),242**
**CHEMICAL ABSTRACTS, Band 101, Nr. 20, November 1984, Seite 196, Zusammenfassung 174599w, Columbus,**

(73) Patentinhaber: **VARTA Batterie Aktiengesellschaft, Am Leineufer 51, D-3000 Hannover 21 (DE)**

(72) Erfinder: **Knabenbauer, Wolfgang, Pappelstrasse 36, D-5800 Hagen (DE)**
Erfinder: **Glötzl, Karl, Am Rotdorn 49, D-4620 Castrop-Rauxel (DE)**
Erfinder: **Sprengel, Dietrich, Dr., Starenweg 9, D-5884 Halver (DE)**
Erfinder: **Tepel, Rudolf, Moorweg 1a, D-3013 Barsinghausen 12 (DE)**

(74) Vertreter: **Kaiser, Dieter Ralf, Dipl.-Ing., Gundelhardtstrasse 72, D-6233 Kelkheim/Ts. (DE)**

(56) Entgegenhaltungen: (Fortsetzung)
**Ohio, US; B. STIKER et al.: "New process to discharge negative cadmium electrodes for nickel/cadmium batteries" & Prog. Batteries Sol. Cells 1984, 5, 363-6**
**PATENTS ABSTRACTS OF JAPAN, Band 5, Nr. 153 (E-76)[825], 26. September 1981; & JP-A-56 86 461**
**PATENTS ABSTRACTS OF JAPAN, Band 8, Nr. 44 (E-229)[1481], 25. Februar 1984; & JP-A-58 201 271**
**PATENTS ABSTRACTS OF JAPAN, Band 4, Nr. 121 (E-23)[603], 27. August 1980; & JP-A-55 76 570**

**Die Akte enthält technische Angaben, die nach dem Eingang der Anmeldung eingereicht wurden und die nicht in dieser Patentschrift enthalten sind.**

**EP 0 160 845 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung eines gasdicht verschlossenen alkalischen Akkumulators, bei dem eine geladene positive Elektrode in Kombination mit einer durch ein chemisches Oxidationsmittel teilentladenen negativen Elektrode in die Zelle eingebaut und diese nach Zugabe des Elektrolyten gasdicht verschlossen wird.

In einer gasdicht arbeitenden Zelle müssen die Kapazitäten der positiven und negativen Elektroden so ausgelegt werden, daß sowohl die geforderte Nennkapazität der Zelle als auch die Funktionsweise bei Überladung und Hochstrombelastung gewährleistet ist.

Zur Absicherung dieser Forderung werden die über die Elektrodengrößen eingebrachten Kapazitäten so ausgelegt, daß sie zum Beispiel im Verhältnis

$$(+):(-) = 1:1,5$$

zueinander stehen. Dieses Verhältnis hängt von Fall zu Fall von den speziellen Ansprüchen an die Zelle, z.B. besondere Überladesicherheit, ab. Außerdem muß der im Laufe des Betriebes nicht vermeidbare Kapazitätsabfall der negativen Elektroden kompensiert werden.

Es sind eine Reihe von derartigen Verfahren bekannt. Bei der Mehrzahl von ihnen wird die negative Elektrode einer Vorladung gegenüber der positiven Elektrode unterzogen, deren Umfang der gewünschten Entladereserve entspricht. Für die Vorladung sind z.B. chemische Reduktionsmittel geeignet. So wird nach DE-A 2 851 463 der mit teilweise entladenen Elektroden bestückten Zelle ein Elektrolyt mit Zusätzen an Methanol, Äthanol oder Propanol zugesetzt. Gemäß den US-A 3 288 643 und US-A 3 297 433 sind die reduzierenden Agenzien Aluminium- oder Zinkpulver, welche der ungeladenen negativen Aktivmasse untermischt werden, ihre gezielte Wirkung auf die negative Elektrode aber, nämlich Reduktion einer bestimmten Menge $Cd(OH_2)$ zu $Cd_{met}$, ebenso wie die genannten Alkohole erst in der elektrolytgefüllten und verschlossenen Zelle entfalten.

Andere bekannte Verfahren bringen die negative Überschußkapazität auf dem Umwege einer speziellen Vorbehandlung der positiven Elektrode ein. So sieht die DE-A 3 026 073 vor, einen Teil der ungeladenen positiven Elektrodenmasse vor dem Zusammenbau mit einer vollständig entladenen Negativen in heißer KOH elektrochemisch bis zum Ni-Metall zu reduzieren. Bei der Ladung der nunmehr verschlossenen Zelle wird die elektrochemische Reduktion rückgängig gemacht und in der negativen Elektrode eine dem oxidierten Ni äquivalente Menge geladenes Cadmium gebildet. Da der Übergang $Ni \rightarrow Ni^{2+}$ an den die Bildung dieses $Cd_{met}$ gekoppelt ist, im späteren Zellenbetrieb keine Umkehrung erfährt, also irreversibel ist, bleibt der hieraus erwachsene Cd-Anteil in der negativen Elektrode nach jeder erschöpfenden Entladung der Zelle als Entladereserve erhalten. Eine ebenfalls irreversible Erzeugung von Entladereserve gelingt nach DE-C 2 156 554 dadurch, daß die antipolare Masse der ungeladenen positiven Elektrode vor dem Einbau mit metallischem Zink versetzt wird, welches nach Einbau und Zusatz des Elektrolyten einen Teil der antipolaren Masse reduziert und daß bei anschliessender Ladung eine dem reduzierten Teil der antipolaren Masse entsprechende Entladereserve der negativen Elektrode gebildet wird.

Ferner gibt es Verfahren, z.B. gemäß FR-A 2 115 704, bei denen die Einstellung der Zellenbalance entsprechend dem gewünschten Auslegungsverhältnis der Elektroden durch Ladung und Überladung in der noch offenen Zelle und in der Kälte herbeigeführt wird. Die Schaffung von Entladereserve durch Teilreduktion von $Cd(OH)_2$-Elektroden in stark reduzierenden chemischen Bädern (DE-A 2 943 101) oder durch thermische Zersetzung von in negative Sinterelektroden eingetränktem Cadmiumformiat (DE-A 2 507 988) ist auch möglich.

Bei einigen der genannten Verfahren ist das angestrebte Kapazitätsverhältnis erst nach erfolgter Inbetriebsetzungsladung endgültig ausbalanciert. Die Verwendung von chemischen Substanzen zur Oxidation oder Reduktion der Elektroden gibt Probleme auf, weil die Reaktionsprodukte nicht leicht aus den Zellen entfernbar sind und dadurch die Zellencharakteristik bei der elektrischen Belastung nachteilig beeinflussen. Bei einer elektrochemischen Einstellung der Zellenbalance in der offenen Zelle sind die mit den Ladungsgasen austretenden Laugenebel äußerst störend. Darüber hinaus hat ein solches Verfahren den Nachteil, daß der Fertigungsablauf aufgrund der zeitlich recht unterschiedlich langen Prozeßschritte nur ungenügend automatisierbar ist.

Schließlich wird in der JP-A 57 151 177 ebenfalls auf gravierende Mängel verwiesen, die allen bisher bekannten Verfahren dieser Art anhaften, wobei insbesondere die exakte Einstellung der Zellenbalance mittels gezielter Teilaufladungen oder Teilentladungen der Negativen schwierig ist. Die Zellenbalance bleibt am wenigsten bei großdimensionierten Elektroden stabil. Die JP-A schlägt als Abhilfe eine Teilentladung der Negativen, nachdem diese mehreren Formierungszyklen unterworfen wurde, durch Einwirkenlassen eines Oxidationsmittels vor, um sie dann zusammen mit einer ebenfalls mehrfach vorformierten, geladenen Positiven einzubauen.

Der Erfindung liegt daher die Aufgabe zugrunde, Maßnahmen einer Elektrodenbehandlung bis zum gemeinsamen Einbau anzugeben, die zum Ergebnis haben, daß die Zelle nach dem Verschluß hinsichtlich einer negativen Lade- und Entladereserve fertig ausbalanciert ist und insbesondere keiner offenen Formation bedarf. Die Aufgabe wird erfindungsgemäß gelöst durch ein Verfahren zur Herstellung eines gasdicht verschlossenen alkalischen Akkumulators, wie es im Patentanspruch 1 definiert ist.

Für die außerhalb der Zelle vorzunehmenden elektrischen bzw. chemischen Bearbeitungsschritte zur Einstellung der Zellenbalance hat es sich als besonders vorteilhaft erwiesen, positive Elektroden mit einer nach dem sogenannten electro-deposit-Verfahren (kathodische Metallabscheidung aus Cadmiumsalzlösungen nach DE-A 2 822 821) hergestellten negativen Elektrode zu kombinieren. Dabei sind die positiven Elektroden stets geladen. Als geladene positive Elektroden kommen beispielsweise Pulverpreßelektroden oder Elektroden aus höherwertigen

Nickeloxiden, die auf chemisch-präparativem Wege gewonnen wurden, in Frage. Mit besonderem Vorteil sind jedoch Sinterelektroden verwendbar, weshalb diese auch für die nachfolgenden Beispiele ausgewählt wurden.

Zunächst konnte festgestellt werden, daß frisch aufgeladene (vorzugsweise 7h mit I = 0,2 CA) positive Sinterelektroden eine gute Lagerfähigkeit besitzen und mindestens 85% der ursprünglich entnehmbaren Kapazität mit hinreichender Konstanz behalten, wenn man sie nach der Ladung alkalifrei wäscht und bei ca. 100°C schnell (ca. 15 Min.) trocknet.

Die nach dem electro-deposit-Verfahren hergestellten negativen Cadmium-Elektroden haben im Durchschnitt eine Restkapazität (gemessen mit I=1 CA) von 80%, bezogen auf die Kapazität des 1. Entladezyklus.

Wie Untersuchungen zeigen, basiert diese Restkapazität nicht auf einer konkreten Menge entladbaren metallischen Cadmiums, sondern vielmehr auf einem Abdeckeffekt durch Cadmiumhydroxid, Cadmiumoxid oder Cadmiumsulfat. Wird eine solche Elektrode ohne vorherige Entladung mit I≙1 CA aufgeladen, dann liegt die aufnehmbare Strommenge bei durchschnittlich 8%, bezogen auf die Kapazität des 1. Entladezyklus.

Wird daher eine solche Elektrode mit einer wie oben beschriebenen positiven Elektrode unter Berücksichtigung eines kostengerechten Flächen- oder Kapazitätsverhältnisses in einer Zelle kombiniert, dann kann ohne eine weitere elektrische oder chemische Behandlung keine ausreichende Ladereserve eingestellt werden.

Es ist daher eine Verringerung der Restkapazität der negativen Elektrode nötig, die außerhalb der Zelle erfolgt.

Ein besonders vorteilhaftes Mittel, um die Restkapazität der negativen Elektrode zu verringern und damit zugleich die notwendige Ladereserve vozugeben, ist die chemische Oxidation mit Kaliumperoxodisulfat, $K_2S_2O_8$, oder Wasserstoffperoxid, $H_2O_2$. Diese Oxidantien bewirken eine gleichmäßige Entladung der Elektrode bei Raumtemperatur. Wasserstoffperoxid bietet darüber hinaus den Vorteil, daß bei der Oxidation des metallischen Cadmiums gemäß

$$Cd + H_2O_2 \rightarrow CdO + H_2O$$

rückstandsfrei entfernbares Wasser entsteht. Ein Teil des Reaktionswassers verdampft sofort, so daß in einem anschließenden Trockenschritt nur noch die Restmenge zu entfernen ist.

Die auf diese Weise teiloxidierten electro-deposit-Elektroden sind ohne Restkapazitätsverlust für längere Zeit an der Luft lagerfähig.

Der Konzentrationsbereich für das Wasserstoffperoxid liegt zwischen 10 und 30 Gew.-% (vorzugsweise 20 Gew.-%).

Die Ausbeute der Oxidationsreaktion beträgt bei Einsatz von 20-%igem Wasserstoffperoxid und den verwendeten electro-deposit-Elektroden bis zur Höhe der vorgegebenen Oxidationsrate im Mittel 90%.

*Beispiele*

Es wird durch zwei Versuchsreihen mit Zellen des gleichen Typs, ausgelegt für eine Nennkapazität NK = 500 mAh und eine Ladereserve von 250 mAh, die erfindungsgemäße Elektrodenvorbehandlung außerhalb der Zelle mit einer bereits praktizierten elektrochemischen Vorbehandlung in ihren Resultaten verglichen.

Bei beiden Versuchsreihen werden negative electro-deposit-Elektroden verwendet, die Vergleichsbehandlung jedoch entspricht einer an sich bekannten offenen Formation.

Für die erfindungsgemäße Behandlung werden entsprechend der Oxidationsgleichung theoretisch 3,52 mg $H_2O_2$ pro mAh eingebrachter Ladereserve benötigt. In der Praxis sollten 3,5 bis 5 mg $H_2O_2$ als 10 bis 30%ige Lösung, vorzugsweise 20%ige Lösung, verwendet werden. Die berechnete Menge Peroxid kann dabei auf die fertige Elektrode oder unmittelbar im Rahmen des Fertigungs-Ablaufes auf das Elektrodenband aufgebracht werden.

Die vorbehandelten Elektroden werden trocken gewickelt, in den Zellenbecher eingebaut und verschweißt. Dann werden die Zellen bis auf das Ventilloch geschlossen. Anschließend wird die benötigte Menge an Elektrolyt (hier vorzugsweise KOH der Dichte 1,30 g $\cdot cm^{-3}$) zugesetzt und die Zelle wird mit dem Ventil verschlossen.

Die Zellen sind nach diesem Schritt voll funktionsfähig und besitzen eine Restkapazität, gemessen bei einer Belastung mit I=1 CA, von 90% der Nennkapazität.

Tabelle 1 gibt einen Überblick über einige elektrische Daten.

*Tabelle 1*

Reihe (1) offene Inbetriebsetzung

Reihe (2) nach dem erfindungsgemäßen Verfahren vorbehandelt

| | |
|---|---|
| Restkapazität | (1) – <br> (2) x = 460 mAh |
| Ladespannung nach Lad.24 h I = 0,33 CA | (1) x =1,53 V <br> (2) x = 1,49 V |
| Kap. bei Belastung mit I = 1 CA (0,95 V) | (1) x = 106% NK <br> (2) x = 105% NK |
| Kap. bei Belastung mit I = 10 CA (0,75 V) | (1) x = 88% NK <br> (2) x = 99% NK |

Der Vorteil der Erfindung kommt in diesen Zahlen zusätzlich durch eine kaum verminderte Nennkapazität bei der hohen Belastung = 10 CA zum Ausdruck.

**Patentansprüche**

1. Verfahren zur Herstellung eines gasdicht verschlossenen alkalischen Akkumulators, bei dem eine geladene positive Elektrode in Kombination mit einer durch ein chemisches Oxidationsmittel teilentladenen negativen Elektrode in die Zelle eingebaut und diese nach Zugabe des Elektrolyten gasdicht verschlossen wird, dadurch gekennzeichnet, daß die der chemischen Behandlung unterworfene negative

Elektrode eine aufgrund ihrer Herstellung durch kathodische Metallabscheidung aus Cadmiumsalzlösungen geladene Cadmiumelektrode ist.

2. Verfahren nach Anspruch 1, dadurch gekennzeichnet, daß zur chemischen Teilentladung der Cadmiumelektrode Kaliumperoxodisulfat, $K_2S_2O_8$, oder vorzugsweise Wasserstoffperoxid verwendet werden.

3. Verfahren nach Anspruch 2, dadurch gekennzeichnet, daß zur Schaffung von 1 mAh Ladereserve in der Cadmiumelektrode 3,5 bis 5 mg $H_2O_2$ als 10 bis 30%ige, vorzugsweise 20%ige Lösung, eingesetzt werden.

**Claims**

1. Process for manufacturing a gas-tightly closed alkaline accumulator in which a charged positive electrode is incorporated into the cell in combination with a negative electrode which has been partially discharged by a chemical oxidant and in which the cell is gas-tightly closed after addition of the electrolyte, characterized in that the negative electrode subjected to the chemical treatment is a cadmium electrode charged as a result of its manufacture by cathodic metal deposition from cadmium salt solutions.

2. Process according to claim 1, characterized in that for the chemical partial discharge of the cadmium electrode potassium peroxide disulphate $K_2S_2O_2$ or preferably hydrogen peroxide is used.

3. Process according to claim 2, characterized in that to produce 1 mAh of charge reserve in the cadmium electrode 3.5 to 5 mg of $H_2O_2$ are used as a 10 to 30%, preferably 20%, solution.

**Revendications**

1. Procédé de fabrication d'un accumulateur alcalin étanche au gaz, procédé dans lequel une électrode positive chargée est montée en combinaison avec une électrode négative partiellement déchargée par un agent d'oxydation chimique, dans l'élément d'accumulateur, et celui-ci, après addition de l'électrolyte, est fermé de façon étanche aux gaz, procédé caractérisé en ce que l'électrode négative soumise au traitement chimique est, du fait de sa fabrication par dépôt cathodique de métal à partir de solutions de sels de cadmium, une électrode de cadmium chargée.

2. Procédé selon la revendication 1, caractérisé en ce que, pour la décharge chimique partielle de l'électrode de cadmium, on utilise du peroxodisulfate de potassium $K_2S_2O_8$, ou de préférence de l'eau oxygénée.

3. Procédé selon la revendication 2, caractérisé en ce que, pour créer une réserve de charge de 1 mAh dans l'électrode de cadmium, on met en oeuvre 3,5 à 5 mg de $H_2O_2$ sous la forme d'une solution à 10 - 30% de préférence à 20%.